# FASCICULE DE BREVET EUROPEEN

(11) **EP 3 830 753 B1**
(45) Date de publication et mention de la délivrance du brevet: **10.09.2025**
(21) Numéro de dépôt: 19765289.4
(22) Date de dépôt: 30.07.2019
(51) Int. Cl.: G06V 20/66, G06V 10/46, G06T 7/00

(54) **PROCEDE DE DECODAGE D'UN INSERT DOTE D'UN USINAGE INTERNE**
VERFAHREN ZUR DECODIERUNG EINES INNENBEARBEITETEN EINSATZES
METHOD FOR DECODING AN INTERNALLY MACHINED INSERT

(30) Priorité: 01.08.2018 FR 1857205
(43) Date de publication de la demande: 09.06.2021
(73) Titulaire: Renault s.a.s, 92100 Boulogne Billancourt (FR)
(72) Inventeur: TABARD, Franck, 78084 GUYANCOURT Cedex (FR)
(74) Mandataire: Ipsilon
(86) Numéro de dépôt international: PCT/FR2019/051873
(87) Numéro de publication internationale: WO 2020/025896

(56) Documents cités:
- EP-A2- 2 894 526
- US-A1- 2010 278 438
- US-A1- 2014 064 597

## Description

L'invention se rapporte à un procédé de décodage d'un insert doté d'un motif interne réalisé par usinage.

De façon générale, un tel insert fait partie intégrante d'une clef, destinée par exemple à être introduite dans une serrure de portière de véhicule, afin de verrouiller ou déverrouiller ladite portière.

De façon schématique, cet insert présente un corps plein, et l'usinage peut être effectué :
- Soit de façon externe, au niveau d'au moins un bord latéral délimitant le corps de l'insert, et dans ce cas l'insert présente un contour accidenté comportant une succession de bosses et de creux dus à cet usinage,
- Soit de façon interne, sous la forme d'un motif creusé dans le corps de l'insert, et dans ce cas l'insert conserve son contour initial.

Ainsi, pour un véhicule donné, l'insert qui a été usiné de façon externe ou interne, est identifiable par un code particulier dépendant notamment des caractéristiques spécifiques de l'usinage et du type de véhicule associé.

La demande US20140064597 décrit un procédé de duplication d'une clef fondée sur l'acquisition d'une image de la clef originale, puis sur l'extraction d'informations géométriques relatives à la clef à partir d'un traitement de ladite image. Ces informations sont ensuite comparées à celles de différentes clefs répertoriées dans une base de données et identifiables chacune par un code. Le code associé à la clef originale peut alors être comparé à celui du modèle de clef lui correspondant. Or, un tel procédé n'est applicable que pour des clefs ayant été usinées de façon externe. Les documents EP2894526 A2 et US 2010/278438 A1 divulguent d'autres techniques de duplication de clefs fondée sur l'acquisition d'une image de la clef originale.

Un procédé de décodage d'un insert selon l'invention permet de décoder tout type d'insert, y compris ceux présentant un usinage réalisé de façon interne.

L'invention a pour objet un procédé de décodage d'un insert doté d'un motif, ledit procédé étant réalisé au moyen d'un système électronique doté d'un écran et possédant un logiciel spécifique de décodage d'inserts.

Selon l'invention, le procédé comprend les étapes suivantes,
- Une étape d'acquisition d'une image de l'insert,
- Une étape de création d'un fichier contenant ladite image,
- Une étape d'activation du logiciel permettant de faire apparaitre sur
   une zone spécifique de l'écran un réseau de lignes prédéfini, dépendant du type d'insert à décoder,
- Une étape d'utilisation comme donnée d'entrée, du fichier dans le logiciel de manière à faire apparaitre l'image de l'insert dans la zone spécifique de l'écran, le réseau de lignes se superposant alors à ladite image,
- Une étape de sélection de certains points d'intersection prédéterminés entre les
   lignes du réseau et un contour du motif de l'insert,
- Une étape de restitution par le système électronique d'un code à plusieurs composantes, correspondant chacune à l'emplacement d'un point d'intersection particulier.

Le principe d'un tel procédé repose sur la superposition d'un réseau de lignes mise en œuvre par le logiciel, et de l'image informatique de l'insert apparaissant sur l'écran, puis sur une sélection de certains points d'intersection prédéterminés entre les lignes dudit réseau et le contour du motif usiné dans l'insert. La sélection s'effectue au moyen d'une interface homme/machine destinée à prendre en compte la localisation de chaque point d'intersection, cette localisation étant ensuite convertie en une composante du code correspondant à l'emplacement d'un point d'intersection particulier. Le réseau de lignes mis en œuvre par le logiciel n'est pas universel, mais dépend du type d'insert à décoder. Le code peut par exemple comprendre une série de chiffres ou de lettres, chacune des composantes dudit code étant alors représentée par un chiffre ou une lettre. Il peut également être représenté par un mélange de chiffres et de lettres. Le nombre de composantes du code correspond au nombre de points d'intersection à sélectionner entre le réseau de lignes et le contour du motif, la valeur de ladite composante reflétant la localisation du point d'intersection considéré le long de la ligne du réseau. Le fichier comportant l'image sert de donnée d'entrée au logiciel, et lorsque ledit logiciel est activé, l'image de l'insert et le réseau de lignes apparaissent simultanément à l'écran du système électronique, en étant superposés. Il devient alors possible pour au moins certaines lignes du réseau de sélectionner les points d'intersection avec le contour du motif afin de former un code final correspondant précisément au motif de l'insert, en termes de forme et de taille. S'il on suppose qu'un insert se définit par une longueur, par une largeur et par une épaisseur, un motif interne est uniquement réalisé dans ladite épaisseur, en ne modifiant ni la largeur ni la longueur dudit insert. Un tel motif interne peut par exemple être représenté par une rainure continue, ou par une série de plusieurs motifs unitaires. Le système électronique permettant de réaliser un procédé selon l'invention, peut par exemple être représenté par un ordinateur, une tablette tactile ou un smartphone. Il est à préciser que l'insert fait partie intégrante d'une clef ou peut constituer ladite clef en elle-même. Préférentiellement, le réseau de lignes est organisé, et peut ne comporter que des lignes horizontales, ou que des lignes verticales ou un mélange de lignes horizontales et verticales. De façon préférentielle, l'image de l'insert est une photo.

Avantageusement, le procédé comprend une étape de mise à l'échelle de l'image de l'insert de manière à venir occuper la zone spécifique de l'écran d'une manière standard. Il est en effet important de faire fonctionner le logiciel toujours avec le même format de photo, afin d'éviter de dénaturer le codage de l'insert par le biais d'un facteur d'échelle non pris en compte.

Selon une caractéristique possible de l'invention, l'image de l'insert est une photo prise verticalement face à l'insert, l'insert étant disposé à plat. Si la photo n'était pas prise dans ces conditions, des moyens de traitement d'image connus permettent de redresser l'image sans la déformer par rapport à la réalité et donc en conservant les proportions réelles.

De façon préférentielle, l'insert est allongé et le motif est une rainure s'étendant au moins partiellement le long dudit insert. Cette rainure est assimilable à une gorge réalisée dans l'épaisseur de l'insert, ladite gorge étant conçue pour ne déborder, ni sur la largeur ni sur la longueur dudit insert. Cette rainure est préférentiellement profilée et peut présenter des secteurs rectilignes et/ou arrondis.

Préférentiellement, le réseau de lignes comprend des lignes horizontales et des lignes verticales entrecoupant lesdites lignes horizontales, ledit réseau réalisant un quadrillage de la zone spécifique de l'écran dans laquelle apparait l'image de l'insert. Pour cette configuration, l'insert est fictivement découpé en secteurs rectangulaires ou carrés, grâce à la superposition du réseau de lignes sur l'image dudit insert.

De façon avantageuse, la rainure est délimitée par deux bords latéraux, les points d'intersection sélectionnés étant constitués par les points d'intersection entre chacune des lignes verticales et au moins l'un desdits deux bords. De cette manière, les points d'intersection à considérer pour l'étape de sélection sont fonction du type d'insert à décoder, et peuvent être constitués par les points d'intersection entre l'un desdits bords et les lignes verticales, ou être constitués par les points d'intersection entre l'autre bord et lesdites lignes verticales, ou être constitués par les points d'intersection entre l'un desdits bords et lesdites lignes verticales en fonction de la position de la ligne verticale.

Avantageusement, le réseau comprend au moins quatre lignes verticales. Selon un premier mode de réalisation préféré d'un procédé selon l'invention, le réseau comprend six lignes verticales. Selon un deuxième mode de réalisation préféré d'un procédé selon l'invention, le réseau comprend huit lignes verticales.

De façon préférentielle, le code est une série de chiffres, le nombre de chiffres correspondant au nombre de points d'intersection détectés entre les lignes verticales et ledit au moins un bord de la rainure, la valeur du chiffre traduisant la position du point d'intersection le long de chaque ligne verticale. De façon analogue, le code peut être constitué par une série de lettres, le nombre de lettres correspondrait au nombre de points d'intersection détectés entre les lignes verticales et le bord de la rainure, la valeur de la lettre traduisant la position du point d'intersection le long de la ligne verticale considérée.

Préférentiellement, le logiciel comprend plusieurs réseaux de lignes correspondant chacun à un modèle d'insert particulier, et ledit procédé comprend une étape de sélection du réseau de lignes approprié en fonction du modèle d'insert à décoder. En effet, le logiciel comprend une base de données constituée par une pluralité de réseau de lignes, chaque réseau de lignes correspondant à un modèle particulier d'insert. Si l'insert est une clef servant à verrouiller ou à déverrouiller les portes d'un véhicule, le logiciel contient une pluralité de réseaux de lignes correspondant chacun à un type ou modèle de véhicule donné.

Selon une caractéristique possible de l'invention, l'étape de sélection du réseau de lignes approprié est effectuée manuellement, au moyen d'un clic sur une icône représentative du modèle de véhicule et/ou du type d'insert

De façon avantageuse, l'étape de sélection des points d'intersection s'effectue par le biais d'une interface homme machine permettant de convertir directement l'emplacement de chaque point en un élément constitutif du code. Cette étape de sélection peut être réalisée par exemple au moyen d'un ordinateur, doté d'un écran, d'un clavier et éventuellement d'une souris. Il peut également être réalisé au moyen d'une tablette dotée d'un écran tactile. Il suffit alors d'exercer avec un doigt ou un stylet une pression sur l'écran à l'emplacement du point d'intersection pour obtenir instantanément la composante du code correspondant à ce point d'intersection.

Avantageusement, le système électronique est un ordinateur équipé d'une souris, l'étape de sélection de chaque point d'intersection consistant à placer le curseur apparaissant à l'écran et piloté par la souris, sur un point d'intersection, puis à cliquer sur ladite souris afin d'obtenir instantanément la composante du code correspondant audit point d'intersection.

Selon une caractéristique possible de l'invention, les points d'intersection à sélectionner sont spécifiquement pré-affichés. De cette manière, un procédé selon l'invention présente un caractère automatique, en s'affranchissant notamment de la mesure de certains points, qui peut toujours constituer une source d'imprécision et donc d'erreur. Cet affichage différent peut par exemple se traduire par une couleur et/ou une forme différente des points à sélectionner ou par le fait que ces points clignotent.

Selon une caractéristique possible de l'invention, les points d'intersection pré affichés, une fois qu'ils ont été sélectionnés, présentent un nouvel affichage distinctif. De cette manière, les différentes étapes d'un procédé selon l'invention sont bien marquées, permettant audit procédé d'être bien structuré et de se dérouler clairement. Ce nouvel affichage peut se traduire par une couleur et/ou une forme différente.

Un procédé de décodage selon l'invention est simple et facile à mettre en œuvre, car il ne nécessite qu'un nombre restreint d'opérations à mener avant l'obtention du code, à savoir une prise d'image de l'insert et une sélection sur l'écran d'un système électronique, de points d'intersection entre un réseau de lignes et le contour d'un motif interne de l'insert. Il a de plus l'avantage de proposer des résultats précis, car l'image de l'insert apparaissant à l'écran est largement agrandie par rapport aux dimensions réelles de l'insert.

On donne ci-après une description détaillée d'un mode de réalisation préféré d'un procédé de décodage selon l'invention, en se référant aux figures suivantes :
- La figure 1 est une vue représentant une image d'un insert ayant un motif interne,
- La figure 2 est une vue d'une capture d'écran montrant une superposition de l'image de l'insert de la figure 1 avec un réseau de lignes obtenu lors de l'activation d'un logiciel de décodage utilisé dans un procédé de décodage selon l'invention,
- La figure 3 est une vue d'une capture d'écran montrant une superposition de l'image d'un deuxième exemple d'insert avec un réseau de lignes obtenu lors de l'activation du logiciel de décodage utilisé dans un procédé de décodage selon l'invention,
- La figure 4 est une vue d'une capture d'écran montrant une superposition de l'image d'un troisième exemple d'insert avec un réseau de lignes obtenu lors de l'activation du logiciel de décodage utilisé dans un procédé de décodage selon l'invention,
- La figure 5 est un logigramme chronologique listant les différentes étapes d'un procédé selon l'invention,
- La figure 6 est une vue d'une capture d'écran montrant une superposition de l'image d'un quatrième exemple d'insert avec un réseau de lignes obtenu lors de l'activation d'un logiciel de décodage utilisé dans un procédé de décodage selon l'invention,

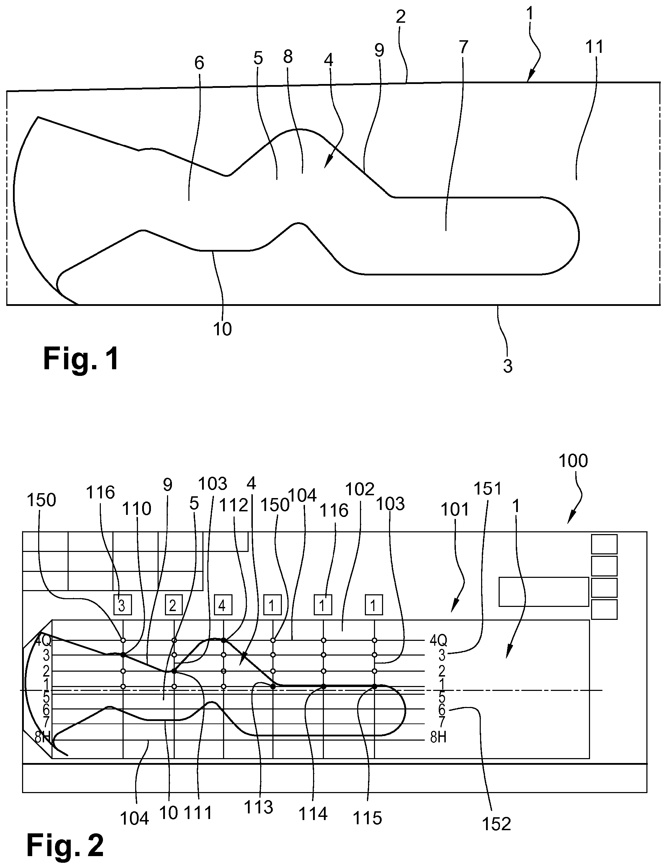

En se référant à la figure 1, un insert 1, dans le cadre d'un procédé de décodage selon l'invention, est destiné à être introduit dans une serrure afin de verrouiller ou déverrouiller ladite serrure. Cet insert 1 peut faire partie intégrante d'une clef ou bien peut constituer la clef en elle-même. Généralement cet insert 1 est allongé et de faible épaisseur. Il est délimité par deux bords latéraux 2, 3 s'étendant selon un axe longitudinal dudit insert 1, la distance séparant lesdits deux bords 2, 3 représentant la largeur de l'insert 1 et la longueur desdits bords 2, 3 latéraux matérialisant la longueur dudit insert 1. Il existe schématiquement deux types d'insert :
- Les inserts qui sont usinés de façon externe et qui présentent donc des reliefs (creux, bosses, dents, crans...) sur au moins l'un desdits deux bords latéraux 2, 3. Cet usinage externe modifie le contour initial de l'insert 1,
- Les inserts qui sont usinés de façon interne, présentant un motif 4 en creux, réalisé dans l'épaisseur de l'insert 1 sans modifier le contour initial dudit insert 1. Autrement dit, pour ce type d'insert, le contour initial est préservé car le motif usiné est circonscrit dans les dimensions de cet insert 1.

Un procédé selon l'invention est particulièrement mais non exclusivement adapté au décodage d'inserts 1 ayant subi un usinage interne.

La figure 1 montre un premier exemple d'un insert 1 ayant subi un usinage interne. Le motif 4 en creux obtenu par cet usinage est une rainure 5 de largeur constante et qui s'étend selon un axe longitudinal de l'insert 1 dans une zone centrale 11 dudit insert 1. Cette rainure 5 présente deux segments 6, 7 sensiblement rectilignes et séparés par un segment 8 formant un coude. Cette rainure 5 est délimitée par un bord supérieur 9, et par un bord inférieur 10, lesdits deux bords étant parallèles le long de ladite rainure 5.

En se référant à la figure 2, un procédé de décodage d'un insert 1 ayant subi un usinage interne, pouvant par exemple être celui qui est illustré à la figure 1, est réalisé au moyen d'un système électronique pouvant par exemple être un ordinateur 100, doté d'un écran 101, d'un clavier et d'une souris. Cet ordinateur 100 comprend un logiciel qui a été spécifiquement développé pour décoder un insert 1 ayant subi un usinage, et plus particulièrement un usinage interne.

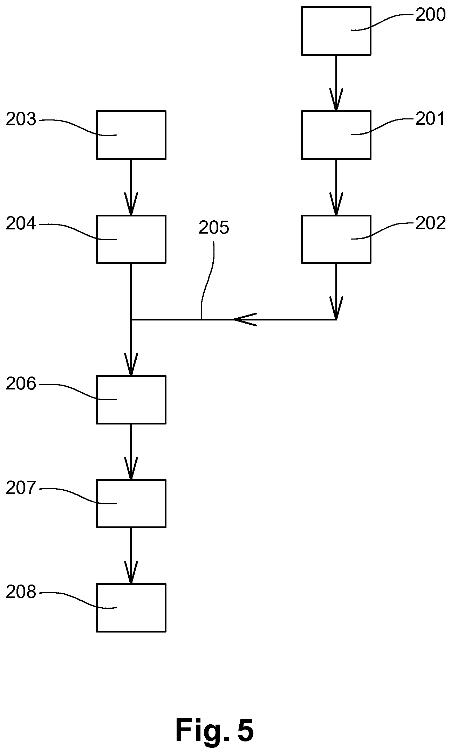

En se référant à la figure 5, un tel procédé comprend les étapes suivantes :
- Une étape d'acquisition 200 d'une image de l'insert 1, par exemple au moyen d'un appareil photo, d'un smartphone ou d'une tablette électronique, ladite image pouvant par exemple être celle représentée à la figure 1. Préférentiellement, la photo est prise verticalement face à l'insert 1 qui a été préalablement disposé à plat sur une surface plane et horizontale,
- Une étape de création 201 d'un fichier contenant ladite photo,
- Une étape de mise à l'échelle 202 de la photo à travers ledit fichier, de façon à obtenir un format standardisé de ladite photo, qui soit exploitable par le logiciel,
- Une étape de sélection 203 dans le logiciel du modèle d'insert 1 à décoder. En effet, le logiciel comprend une base de données correspondant à différents modèles d'inserts existants, et la sélection de l'un de ces modèles d'insert dans le logiciel va conditionner le reste du procédé de décodage. Un modèle d'insert 1 enregistré dans le logiciel peut par exemple correspondre à une marque particulière de véhicule et/ou à un modèle spécifique de véhicule. Il suffit alors par exemple de cliquer sur une icône représentative du modèle de véhicule auquel est associé l'insert 1 à décoder, pour orienter les différentes étapes postérieures du procédé de décodage. La base de données peut être à tout moment réactualisée par l'ajout de nouveaux modèles d'inserts 1.
- Une étape d'activation 204 du logiciel faisant apparaitre dans une zone spécifique 102 de l'écran 101 un réseau de lignes, comprenant des lignes verticales 103 et des lignes horizontales 104, ledit réseau correspondant au type d'insert 1 sélectionné à l'étape précédente. Sur l'exemple illustré à la figure 2, le réseau de lignes comprend six lignes verticales 103, dont l'espacement entre deux lignes 103 successives est constant. Cette étape d'activation comprend donc l'étape de sélection du réseau de lignes à faire apparaitre à l'écran 101, dépendant des caractéristiques de l'insert 1 à décoder. En effet, le réseau de lignes mis en œuvre par le logiciel, et en particulier le nombre de lignes horizontales 104 et verticales 103 ainsi que leur disposition sur l'écran 101, va dépendre du type d'insert 1 sélectionné. Il est à préciser que les lignes horizontales 104 et les lignes verticales 103 s'entrecroisent, de manière à former un quadrillage de la zone spécifique 102 de l'écran 101,
- Une étape d'utilisation 205 comme donnée d'entré, du fichier dans le logiciel de manière à faire apparaitre l'image de l'insert 1 dans la zone spécifique 102 de l'écran 101 où apparait le réseau de lignes 103, 104, de sorte que ledit réseau de lignes 103, 104 se superpose alors à ladite image. L'insert 1 se retrouve alors quadrillé par ces lignes 103, 104, dont toutes ou certaines des intersections apparaissent par exemple sous forme de point à cliquer, par exemple sous forme de cercle coloré « cliquable », ce qui permet de les rendre plus visibles. Le fichier contenant l'image de l'insert 1 constitue la principale donnée d'entrée du logiciel. Il est à préciser que la grille comprenant le réseau de lignes 103, 104 est transparente et qu'elle peut venir se superposer à l'image de l'insert 1 apparaissant sur l'écran 101. Le niveau de transparence de cette grille est ajustable en fonction des caractéristiques de l'image de l'insert 1.
- Une étape de mise en rotation 206 de l'image de l'insert 1 apparaissant à l'écran 101, si les bords latéraux 2, 3 dudit insert 1 ne sont pas parallèles aux lignes horizontales 104 du réseau de lignes 103, 104. Cette étape de mise en rotation sert en effet à faire pivoter l'image de l'insert de manière à rendre parallèles lesdits deux bords 2, 3 auxdites lignes horizontales 104 du réseau. Il est important de positionner l'image de l'insert 1 de façon précise par rapport au réseau de lignes 103, 104 sous peine de biaiser le décodage.
- Une étape de sélection 207, pour chacune des six lignes verticales 103, du point d'intersection 110, 111, 112, 113, 114, 115 de ladite ligne verticale 103 avec le bord supérieur 9 de la rainure 5. Cette étape de sélection s'effectue manuellement en plaçant le curseur apparaissant à l'écran et dont le déplacement est piloté par la souris (ou le clavier), sur le point d'intersection 110, 111, 112, 113, 114, 115 considéré puis en cliquant sur la souris. Les points d'intersections sur lesquels a porté cette étape de sélection sont rendus visuellement distincts des autres points d'intersection 150 placés autour desdits points d'intersection sélectionnés 110, 111, 112, 113, 114, 115, soit par exemple parce qu'ils apparaissent avec une couleur ou une surbrillance différente, soit parce qu'ils clignotent.

- Une étape de restitution 208 par le système électronique d'un code comprenant plusieurs composantes, correspondant chacune à l'emplacement d'un point d'intersection particulier 110, 111, 112, 113, 114, 115 le long d'une ligne verticale 103. Le fait de cliquer sur la souris lors de l'étape de sélection précédente lorsque le curseur est placé sur un point d'intersection 110, 111, 112, 113, 114, 115 se traduit par l'apparition sur l'écran 101, d'un chiffre 116 ou d'une lettre traduisant la position du point d'intersection le long de la ligne verticale 103 prise en considération. Ce chiffre ou cette lettre constitue une composante du code final permettant de caractériser la qualité de l'usinage de l'insert 1. Puisque dans l'exemple considéré le réseau de lignes fait apparaitre six lignes verticales 103, le code de l'insert 10 va comprendre six composantes, sous la forme chacune d'un chiffre ou d'une lettre. En l'occurrence, ce code est 324111 sur l'exemple considéré à la figure 2.
- Une fois ce code déterminé, il devient possible de le comparer à un code de référence correspondant à ce modèle d'insert 1, et ainsi d'évaluer la qualité de l'usinage de l'insert 1.

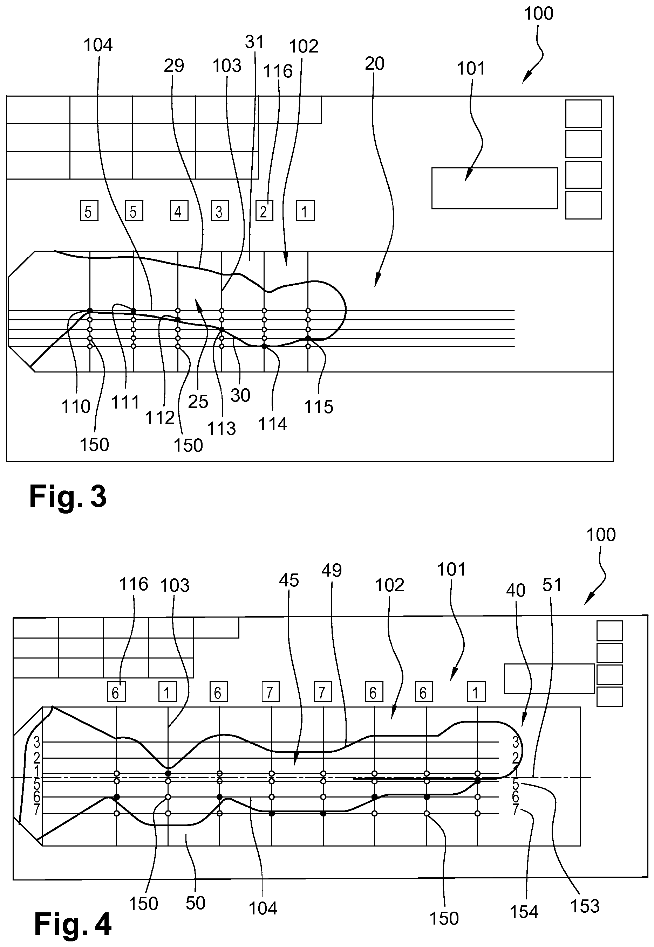

En se référant à la figure 3, un deuxième exemple d'insert 20 peut comprendre un motif 4 sous la forme d'une rainure interne 25 s'étendant le long de l'insert 20, dans une zone supérieure 31 dudit insert 20. Cette rainure 25 est également délimitée par un bord supérieur 29 et par un bord inférieur 30, lesdits deux bords 29, 30 étant parallèles. Dans ce cas, puisque la rainure 25 occupe une zone supérieure 31 de l'insert 20, l'étape de sélection va consister à sélectionner pour chacune des lignes verticales 103, le point d'intersection de ladite droite verticale 103 avec le bord inférieur 30 de la rainure 25, et non plus avec le bord supérieur 29 comme c'était le cas dans l'exemple précédent.

En se référant à la figure 4, un troisième exemple d'insert 40 peut comprendre une rainure interne 45 s'étendant le long de l'insert 40, plutôt dans une zone centrale 51 dudit insert 40. Cette rainure 45 est également délimitée par un bord supérieur 49 et par un bord inférieur 50, lesdits deux bords 49, 50 étant parallèles. Dans ce cas, puisque la rainure 45 occupe une position centrale dans l'insert 40, l'étape de sélection va consister à sélectionner pour chacune des droites verticales 103, le point d'intersection de ladite droite verticale 103, soit avec le bord inférieur 50 de la rainure 45, soit avec le bord supérieur 49 de celle-ci.

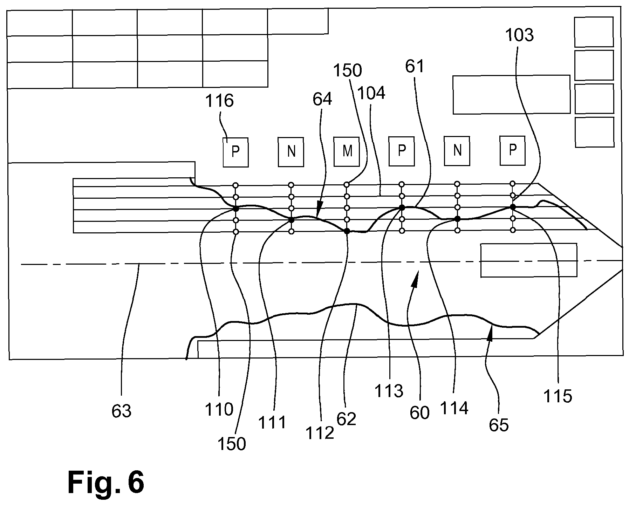

En se référant à la figure 6, un quatrième exemple d'insert 60 pouvant être décodé par un procédé selon l'invention, a subi un usinage externe faisant apparaitre des reliefs externes sous la forme de bosses 61 et de creux 62 modifiant le contour dudit insert 60. Cet insert 60, une fois usiné, présente un axe de symétrie 63 matérialisé par un axe longitudinal et central dudit insert 60. Autrement dit, une fois usiné, l'insert 60 est délimité par un bord latéral supérieur 64 et par un bord latéral inférieur 65, lesdits bords présentant des bosses 61 et des creux 62 aux mêmes emplacements, le long d'un axe longitudinal dudit insert 60. L'étape de sélection va consister à sélectionner pour chacune des droites verticales 103, le point d'intersection de ladite droite verticale 103 avec le bord latéral 64 supérieur dudit insert 60. Sur l'exemple considéré, puisque le réseau de lignes fait apparaitre six lignes verticales 103, le code déterminé par un procédé selon l'invention et correspondant cet insert 60 sera composé de six chiffres ou de six lettres 116. Les étapes peuvent alors être exécutées sur chaque bord latéral, l'un après l'autre.

Ce procédé économise le temps de son utilisateur puisqu'il lui permet avec un nombre réduit de clics d'obtenir le code de l'insert et ce, sans que l'utilisateur n'ait de mesure à effectuer lui-même, et ce, pour tout modèle d'insert avec motif interne et/ou externe, et à partir d'une simple image de l'insert et une éventuelle étape de sélection du réseau de lignes approprié en fonction du modèle d'insert à décoder, l'étape de sélection du réseau approprié étant préférentiellement effectuée manuellement, notamment au moyen d'un clic sur une icône représentative du modèle de véhicule et/ou représentative du type d'insert (par exemple: motif interne, motif externe bi-côtés, motif interne associé à une rainure...).

En effet l'étape de sélection des points d'intersection s'effectue par le biais d'une interface homme machine permettant de convertir directement l'emplacement de chaque point en un élément constitutif du code, sans nécessiter de mesure puisque ce sont des points du réseau qui sont sélectionnés et correspondant donc directement à un élément constitutif du code.

L'étape de sélection des points d'intersection 110, 111, 112, 113, 114, 115) peut être effectuée manuellement ou par un procédé de reconnaissance d'image.

L'étape de sélection des points est effectuée parmi les points d'intersection des lignes du réseau, lesdits points d'intersection étant, tous ou au moins certains d'entre eux, préférentiellement spécifiquement pré-affichés au moyen d'un cercle coloré « cliquable » par exemple, ce qui permet de réduire les erreurs. Préférentiellement, chacun des points pré-affichés qui a été sélectionné 110, 111, 112, 113, 114, 115 est alors affiché différemment par rapport à son apparence avant la sélection. Ce nouvel affichage peut, par exemple, s'effectuer par le biais d'une autre couleur ou d'une autre forme de point. Les cercles colorés sont par exemple une émulation de LED éteintes qui s'allument en rouge lorsque l'on clique dessus, afin de réduire la marge d'erreurs lors du décodage. En effet, à titre d'exemple, les points d'intersection entre les lignes verticales 103 et les lignes horizontales 104 apparaissent chacun sous la forme d'un cercle blanc 150 émulant une LED éteinte et les points d'intersection 110, 111, 112, 113, 114, 115 à une fois sélectionnés apparaissent chacun sous la forme d'un cercle rouge, émulant une LED allumée. De cette façon, il n'existe aucune ambiguïté sur les points d'intersection déjà sélectionnés.

Les points d'intersection pré-affichés 150 correspondent à toutes les positions de rupture de pente (creux ou bosse, que le motif soit interne ou externe) connues de tous les gabarits d'inserts correspondant au modèle d'insert à décoder choisi, ils permettent ainsi de composer les différentes combinaisons possibles correspondantes aux gabarits de la base de données, pour ce modèle d'insert à décoder, et à chaque point correspond une composante 116 de code prédéterminé, qui sera affichée une fois le point cliqué. Une fois l'étape de sélection des points effectuée, par exemple avec un point cliqué par ligne verticale, alors la combinaison des composantes 116 de code correspondant à chacun des points cliqués révèle le code de l'insert, correspondant à cette combinaison de composantes. Ce code est alors affiché dans un encart distinct, après une éventuelle étape de demande dudit code par clic sur une icône donnée. Le code alors affiché correspondant au code référençant l'unique gabarit de la base de données auquel correspond la suite des composantes affichées.

La base de données peut être régulièrement enrichie de nouveaux gabarits, attribués à un modèle d'insert donné, ces gabarits pouvant donner lieu à une modification du réseau associé et/ou à l'apparition de nouveaux éléments constitutifs du code de l'insert. Sur l'exemple de la figure 2, différentes lignes 151, 152 répertoriées apparaissent, matérialisant un modèle d'insert 1 donné. Pour un autre modèle d'insert 1, il n'est pas exclu qu'une ou deux autres lignes (verticale et/ou horizontale) puissent apparaitre ou disparaitre pour matérialiser ce nouvel insert 1. Il en est de même sur l'exemple de la figure 4, pour lequel des lignes 153, 154 apparaissent pour un modèle d'insert 1 donné. Pour un autre modèle d'insert 1, d'autres lignes pourraient également venir s'ajouter ou se retirer.

## Revendications

1. Procédé de décodage d'un insert (1, 20, 40) doté d'un motif (4, 5, 25, 45), ledit procédé étant réalisé au moyen d'un système électronique (100) doté d'un écran (101) et possédant un logiciel spécifique de décodage d'inserts (1, 20, 40), **caractérisé en ce qu'**il comprend les étapes suivantes,
- Une étape d'acquisition d'une image de l'insert (1, 20, 40),
- Une étape de création d'un fichier contenant ladite image,
- Une étape d'activation du logiciel permettant de faire apparaitre sur une zone spécifique (102) de l'écran (101) un réseau de lignes (103, 104) prédéfini, dépendant du type d'insert (1, 20, 40) à décoder,
- Une étape d'utilisation comme donnée d'entrée, du fichier dans le logiciel de manière à faire apparaitre l'image de l'insert (1, 20, 40) dans la zone spécifique (102) de l'écran (101), le réseau de lignes se superposant alors à ladite image,
- Une étape de sélection de certains points (110, 111, 112, 113, 114, 115) d'intersection prédéterminés entre les lignes (103, 104) du réseau et un contour du motif (4, 5, 25, 45) de l'insert (1, 20, 30),
- Une étape de restitution par le système électronique (100) d'un code comprenant plusieurs composantes (116), correspondant chacune à l'emplacement d'un point d'intersection (110, 111, 112, 113, 114, 115) particulier.

2. Procédé de décodage selon la revendication 1, **caractérisé en ce que** le motif de l'insert (1, 20, 40) est un motif interne (4, 5, 25, 45)

3. Procédé de décodage selon la revendication 2, **caractérisé en ce qu'**il comprend une étape de mise à l'échelle de l'image de l'insert (1, 20, 40) de manière à venir occuper la zone spécifique (102) de l'écran (101) d'une manière standard.

4. Procédé de décodage selon l'une quelconque des revendications 2 ou 3, **caractérisé en ce que** l'image de l'insert (1, 20, 40) est une photo prise verticalement face à l'insert (1, 20, 40), l'insert (1, 20, 40) étant disposé à plat

5. Procédé de décodage selon l'une quelconque des revendications 2 à 4, **caractérisé en ce que** l'insert (1, 20, 40) est allongé et le motif (4) est une rainure (5, 25, 45) s'étendant au moins partiellement le long dudit insert (1, 20, 40).

6. Procédé de décodage selon la revendication 5, **caractérisé en ce que** le réseau de lignes comprend des lignes horizontales (104) et des lignes verticales (103) entrecoupant lesdites lignes horizontales (104), et **en ce que** ledit réseau réalise un quadrillage de la zone spécifique (102) de l'écran (101) dans laquelle apparait l'image de l'insert (1, 20, 40).

7. Procédé de décodage selon la revendication 6, **caractérisé en ce que** la rainure (5, 25, 45) est délimitée par deux bords latéraux (9, 10, 29, 30, 49, 50), et **en ce que** les points d'intersection sélectionnés sont constitués par les points d'intersection entre chacune des lignes verticales (103) et au moins l'un desdits deux bords (9, 10, 29, 30, 49, 50).

8. Procédé de décodage selon l'une quelconque des revendications 6 ou 7, **caractérisé en ce que** le réseau comprend au moins quatre lignes verticales (103).

9. Procédé de décodage selon l'une quelconque des revendications 6 à 8, **caractérisé en ce que** le code est une série de chiffres (116), et **en ce que** le nombre de chiffres (116) correspond au nombre de points d'intersection (110, 111, 112, 113, 114, 115) détectés entre les lignes verticales (103) et ledit au moins un bord (9, 10, 29, 30, 49, 50) de la rainure (5, 25, 45), la valeur du chiffre (116) traduisant la position du point d'intersection (110, 111, 112, 113, 114, 115) le long de chaque ligne verticale (103).

10. Procédé de décodage selon l'une quelconque des revendications 1 à 9, **caractérisé en ce que** le logiciel comprend plusieurs réseaux de lignes correspondant chacun à un modèle d'insert (1, 20, 40) particulier, et **en ce qu'**il comprend une étape de sélection du réseau de lignes approprié en fonction du modèle d'insert (1, 20, 30) à décoder.

11. Procédé de décodage selon la revendication 10, **caractérisé en ce que** l'étape de sélection du réseau de lignes approprié est effectué manuellement, au moyen d'un clic sur une icône représentative du modèle de véhicule et/ou du type d'insert (1, 20, 30)

12. Procédé de décodage selon l'une quelconque des revendications 1 à 11, **caractérisé en ce que** l'étape de sélection des points d'intersection (110, 111, 112, 113, 114, 115) s'effectue par le biais d'une interface homme machine permettant de convertir directement l'emplacement de chaque point (110, 111, 112, 113, 114, 115) en un élément (116) constitutif du code.

13. Procédé de décodage selon l'une quelconque des revendications 1 à 12, **caractérisé en ce que** les points d'intersection (110, 111, 112, 113, 114, 115) à sélectionner sont spécifiquement pré-affichés.

14. Procédé de décodage selon la revendication 13, **caractérisé en ce que** les points d'intersection (110, 111, 112, 113, 114, 115) pré-affichés, une fois qu'ils ont été sélectionnés, présentent un nouvel affichage distinctif.

## Patentansprüche

1. Verfahren zur Decodierung eines Einsatzes (1, 20, 40), der mit einem Muster (4, 5, 25, 45) versehen ist, wobei das Verfahren mittels eines elektronischen Systems (100) ausgeführt wird, das mit einem Bildschirm (101) versehen ist und eine spezifische Software zur Decodierung von Einsätzen (1, 20, 40) besitzt, **dadurch gekennzeichnet, dass** es die folgenden Schritte umfasst,
- Einen Schritt des Erfassens eines Bildes des Einsatzes (1, 20, 40),
- Einen Schritt des Erstellens einer Datei, die das Bild enthält,
- Einen Schritt des Aktivierens der Software, die es ermöglicht, in einem spezifischen Bereich (102) des Bildschirms (101) ein vorgegebenes Liniennetz (103, 104) erscheinen zu lassen, das von der Art des zu decodierenden Einsatzes (1, 20, 40) abhängt,
- Einen Schritt des Verwendens der Datei als Eingangsdaten in der Software, so dass das Bild des Einsatzes (1, 20, 40) in dem spezifischen Bereich (102) des Bildschirms (101) angezeigt wird, wobei sich das Liniennetz dann dem Bild überlagert,
- Einen Schritt des Auswählens von einigen vorbestimmten Schnittpunkten (110, 111, 112, 113, 114, 115) zwischen den Linien (103, 104) des Netzes und einem Umriss des Musters (4, 5, 25, 45) des Einsatzes (1, 20, 30),
- Einen Schritt des Ausgebens eines Codes durch das elektronische System (100), der mehrere Komponenten (116) umfasst, von denen jede der Position eines besonderen Schnittpunkts (110, 111, 112, 113, 114, 115) entspricht.

2. Verfahren zur Decodierung nach Anspruch 1, **dadurch gekennzeichnet, dass** das Muster des Einsatzes (1, 20, 40) ein internes Muster (4, 5, 25, 45) ist.

3. Verfahren zur Decodierung nach Anspruch 2, **dadurch gekennzeichnet, dass** es einen Schritt des Skalierens des Bildes des Einsatzes (1, 20, 40) umfasst, so dass der spezifische Bereich (102) des Bildschirms (101) auf eine standardisierte Weise eingenommen wird.

4. Verfahren zur Decodierung nach einem der Ansprüche 2 oder 3, **dadurch gekennzeichnet, dass** das Bild des Einsatzes (1, 20, 40) ein Foto ist, das vertikal gegenüber dem Einsatz (1, 20, 40) aufgenommen ist, wobei der Einsatz (1, 20, 40) flachliegend angeordnet ist.

5. Verfahren zur Decodierung nach einem der Ansprüche 2 bis 4, **dadurch gekennzeichnet, dass** der Einsatz (1, 20, 40) länglich ist und das Muster (4) eine Rille (5, 25, 45) ist, die sich mindestens teilweise entlang des Einsatzes (1, 20, 40) erstreckt.

6. Verfahren zur Decodierung nach Anspruch 5, **dadurch gekennzeichnet, dass** das Liniennetz horizontale Linien (104) und vertikale Linien (103), welche die horizontalen Linien (104) schneiden, umfasst und dass das Netz ein Gitter des spezifischen Bereichs (102) des Bildschirms (101) bildet, in dem das Bild des Einsatzes (1, 20, 40) erscheint.

7. Verfahren zur Decodierung nach Anspruch 6, **dadurch gekennzeichnet, dass** die Rille (5, 25, 45) durch zwei seitliche Ränder (9, 10, 29, 30, 49, 50) begrenzt wird und dass die ausgewählten Schnittpunkte aus den Schnittpunkten zwischen jeder der vertikalen Linien (103) und mindestens einem der beiden Ränder (9, 10, 29, 30, 49, 50) bestehen.

8. Verfahren zur Decodierung nach einem der Ansprüche 6 oder 7, **dadurch gekennzeichnet, dass** das Netz mindestens vier vertikale Linien (103) umfasst.

9. Verfahren zur Decodierung nach einem der Ansprüche 6 bis 8, **dadurch gekennzeichnet, dass** der Code eine Reihe von Ziffern (116) ist und dass die Anzahl von Ziffern (116) der Anzahl von detektierten Schnittpunkten (110, 111, 112, 113, 114, 115) zwischen den vertikalen Linien (103) und dem mindestens einen Rand (9, 10, 29, 30, 49, 50) der Rille (5, 25, 45) entspricht, wobei der Wert der Ziffer (116) die Lage des Schnittpunkts (110, 111, 112, 113, 114, 115) entlang jeder vertikalen Linie (103) zum Ausdruck bringt.

10. Verfahren zur Decodierung nach einem der Ansprüche 1 bis 9, **dadurch gekennzeichnet, dass** die Software mehrere Liniennetze umfasst, von denen jedes einem besonderen Modell des Einsatzes (1, 20, 40) entspricht, und dass es einen Schritt des Auswählens des geeigneten Liniennetzes in Abhängigkeit von dem zu decodierenden Modell des Einsatzes (1, 20, 30) umfasst.

11. Verfahren zur Decodierung nach Anspruch 10, **dadurch gekennzeichnet, dass** der Schritt des Auswählens des geeigneten Liniennetzes manuell erfolgt durch ein Anklicken eines Symbols, welches für das Fahrzeugmodell und/oder den Typ des Einsatzes (1, 20, 30) repräsentativ ist.

12. Verfahren zur Decodierung nach einem der Ansprüche 1 bis 11, **dadurch gekennzeichnet, dass** der Schritt des Auswählens der Schnittpunkte (110, 111, 112, 113, 114, 115) über eine Mensch-Maschine-Schnittstelle erfolgt, die es ermöglicht, die Position jedes Punktes (110, 111, 112, 113, 114, 115) direkt in einen Bestandteil (116) des Codes umzuwandeln.

13. Verfahren zur Decodierung nach einem der Ansprüche 1 bis 12, **dadurch gekennzeichnet, dass** die auszuwählenden Schnittpunkte (110, 111, 112, 113, 114, 115) spezifisch vorab angezeigt werden.

14. Verfahren zur Decodierung nach Anspruch 13, **dadurch gekennzeichnet, dass** die vorab angezeigten Schnittpunkte (110, 111, 112, 113, 114, 115), sobald sie ausgewählt worden sind, eine neue distinktive Anzeige aufweisen.

## Claims

1. Method for decoding an insert (1, 20, 40) provided with a pattern (4, 5, 25, 45), said method being carried out by means of an electronic system (100) provided with a screen (101) and having specific software for decoding inserts (1, 20, 40), **characterized in that** it comprises the following steps,
- A step of acquisition of an image of the insert (1, 20, 40),
- A step of creation of a file containing said image,
- A step of activation of the software making it possible to show, on a specific zone (102) of the screen (101), a predefined network of lines (103, 104), depending on the type of insert (1, 20, 40) to be decoded,
- A step of use, as input datum, of the file in the software so as to show the image of the insert (1, 20, 40) in the specific zone (102) of the screen (101), the network of lines then being overlaid on said image,
- A step of selection of certain predetermined points (110, 111, 112, 113, 114, 115) of intersection between the lines (103, 104) of the network and a contour of the pattern (4, 5, 25, 45) of the insert (1, 20, 30),
- A step of rendering, by the electronic system (100), of a code comprising several components (116), each corresponding to the location of a particular point of intersection (110, 111, 112, 113, 114, 115).

2. Decoding method according to Claim 1, **characterized in that** the pattern of the insert (1, 20, 40) is an internal pattern (4, 5, 25, 45).

3. Decoding method according to Claim 2, **characterized in that** it comprises a step of scaling of the image of the insert (1, 20, 40) so as to occupy the specific zone (102) of the screen (101) in a standard manner.

4. Decoding method according to either one of Claims 2 and 3, **characterized in that** the image of the insert (1, 20, 40) is a photo taken vertically facing the insert (1, 20, 40), the insert (1, 20, 40) being positioned flat.

5. Decoding method according to any one of Claims 2 to 4, **characterized in that** the insert (1, 20, 40) is elongate and the pattern (4) is a groove (5, 25, 45) extending at least partially along said insert (1, 20, 40).

6. Decoding method according to Claim 5, **characterized in that** the network of lines comprises horizontal lines (104) and vertical lines (103) intersecting said horizontal lines (104), and **in that** said network produces a mesh of the specific zone (102) of the screen (101) in which the image of the insert (1, 20, 40) appears.

7. Decoding method according to Claim 6, **characterized in that** the groove (5, 25, 45) is delimited by two lateral edges (9, 10, 29, 30, 49, 50), and **in that** the selected points of intersection consist of the points of intersection between each of the vertical lines (103) and at least one of said two edges (9, 10, 29, 30, 49, 50).

8. Decoding method according to either one of Claims 6 and 7, **characterized in that** the network comprises at least four vertical lines (103).

9. Decoding method according to any one of Claims 6 to 8, **characterized in that** the code is a series of digits (116), and **in that** the number of digits (116) corresponds to the number of points of intersection (110, 111, 112, 113, 114, 115) detected between the vertical lines (103) and said at least one edge (9, 10, 29, 30, 49, 50) of the groove (5, 25, 45), the value of the digit (116) reflecting the position of the point of intersection (110, 111, 112, 113, 114, 115) along each vertical line (103).

10. Decoding method according to any one of Claims 1 to 9, **characterized in that** the software comprises several networks of lines each corresponding to a particular model of insert (1, 20, 40), and **in that** it comprises a step of selection of the appropriate network of lines as a function of the model of insert (1, 20, 30) to be decoded.

11. Decoding method according to Claim 10, **characterized in that** the step of selection of the appropriate network of lines is performed manually, by means of a click on an icon representative of the model of vehicle and/or the type of insert (1, 20, 30).

12. Decoding method according to any one of Claims 1 to 11, **characterized in that** the step of selection of the points of intersection (110, 111, 112, 113, 114, 115) is performed through a human-machine interface making it possible to directly convert the location of each point (110, 111, 112, 113, 114, 115) into a constituent element (116) of the code.

13. Decoding method according to any one of Claims 1 to 12, **characterized in that** the points of intersection (110, 111, 112, 113, 114, 115) to be selected are specifically predisplayed.

14. Decoding method according to Claim 13, **characterized in that** the points of intersection (110, 111, 112, 113, 114, 115) predisplayed, once they have been selected, present a distinctive new display.
